# EUROPÄISCHE PATENTSCHRIFT

(11) **EP 4 136 016 B1**
(45) Veröffentlichungstag und Bekanntmachung des Hinweises auf die Patenterteilung: **25.06.2025**
(21) Anmeldenummer: 21720213.4
(22) Anmeldetag: 15.04.2021
(51) Int. Cl.: B62J 43/23, B62J 43/13, B62H 5/00, B62M 6/90

(54) **ELEKTROFAHRRAD**
ELECTRIC BICYCLE
VÉLO ÉLECTRIQUE

(30) Priorität: 17.04.2020 DE 102020204881
(43) Veröffentlichungstag der Anmeldung: 22.02.2023
(73) Patentinhaber: SRAM, LLC, Chicago, IL 60607 (US)
(72) Erfinder: SCHAEFER, Jonni, 30419 Hannover (DE); WURMBÄCK, Christian, 41460 Neuss (DE)
(74) Vertreter: terpatent PartGmbB
(86) Internationale Anmeldenummer: PCT/EP2021/059832
(87) Internationale Veröffentlichungsnummer: WO 2021/209570

(56) Entgegenhaltungen:
- EP-A1- 3 628 579
- DE-A1- 102018 006 690
- DE-B3- 102016 213 903
- DE-U1- 202016 104 156

## Beschreibung

Die Erfindung betrifft ein Elektrofahrrad, an dem ein auswechselbarer Energiespeicher mittels eines Schlosses sicherbar ist.

Beim Elektrofahrrad wird der Energiespeicher zunehmend in den Fahrradrahmen integriert, insbesondere in ein Unterrohr. Insbesondere dann, wenn der Fahrradrahmen kleine Abmessungen aufweist, es sich um ein vollgefedertes Elektrofahrrad handelt oder ein zusätzlicher Energiespeicher verwendet wird, ist es notwendig den Energiespeicher nach unten aus dem Fahrradrahmen zu entnehmen. Bei der Entriegelung eines Schlosses, mit welchem der Energiespeicher am Fahrradrahmen gesichert ist, besteht die Gefahr, dass der Energiespeicher infolge seines großen Gewichts zu Boden fällt und beschädigt wird.

Aus DE 10 2016 213 903 B3, DE 20 2016 104 156 U1, EP 3628579 A1, DE 10 2017 005 434 A1 und der gattungsgemäßen DE 10 2018 006 690 A1 ist jeweils eine mehrstufige Herausfallsicherung bekannt. Nach der Entriegelung des Schlosses muss jedoch die zweite mechanische Sicherungsstufe separat manuell gelöst werden, so dass in der Summe mindestens Entriegelungs-Bedienungsschritte erforderlich sind.

Die Erfindung hat die Aufgabe, die Entnahme eines Energiespeichers von einem Elektrofahrrad sicherer und einfacher zu gestalten.

Diese Aufgabe wird erfindungsgemäß gelöst mit einem Elektrofahrrad mit den Merkmalen des Anspruchs 1.

Die Erfindung löst die gestellte Aufgabe mit einem Elektrofahrrad der eingangs genannten Art, bei dem erfindungsgemäß der Energiespeicher bei einem entriegelten Schloss mit einer Herausfallsicherung am Fahrradrahmen gehalten wird. Das Schloss hält im verriegelten Schloss-Zustand den Energiespeicher unverlierbar an dem Fahrradrahmen bzw. in einer entsprechenden Halterung in oder an dem Fahrradrahmen. Sobald das Schloss entriegelt ist, hindert die Herausfallsicherung den Energiespeicher daran, zu Boden zu fallen, so dass dieser vor einer unerwünschten Beschädigung durch Herunterfallen geschützter ist als bisher und die Gefahr hoher Anschaffungskosten für den Ersatz des Energiespeichers reduziert ist.

Die Herausfallsicherung ist als eine kraftschlüssige Rastverbindung ausgebildet. Die mindestens eine Rastverbindung hält den Energiespeicher kraftschlüssig am Fahrradrahmen fest, wenn das Schloss entriegelt ist. Zur Entnahme des Energiespeichers muss die Haltekraft der mindestens einen Rastverbindung überwunden werden. Sobald also das Schloss entriegelt ist, wirkt die Haltekraft der mindestens einen Rastverbindung der Gewichtskraft des Energiespeichers entgegen, so dass die Gefahr eines unerwünschten zu Boden Fallens des Energiespeichers reduziert ist.

Die Rastkraft der Herausfallsicherung ist derart ausgelegt, dass der Energiespeicher im statischen Zustand des Elektrofahrrads nicht allein durch seine Gewichtskraft bzw. das hierdurch generierte statische Drehmoment die Rastverbindung bzw. die Rastverbindungen öffnet. Die Rastkraft in Öffnungsrichtung sollte mindestens 10 % über der in Entnahmerichtung wirkenden Gewichtskraft liegen.

Im umgekehrten Fall des Anbringens des Energiespeichers am Fahrradrahmen bzw. des Einsetzens des Energiespeichers in den Fahrradrahmen muss die Haltekraft zum Einrasten der Rastverbindung aufgebracht werden, so dass ein Einschnappen der Rastverbindung hörbar und/oder spürbar ist, wodurch das sichere Einrasten quittiert wird.

Durch die Verwendung mindestens einer Rastverbindung als Herausfallsicherung und durch das mögliche Weggelassen einer zweiten rein formschlüssigen Haltestufe lässt sich der Energiespeicher nach einem einzigen Entriegelungsschritt, nämlich dem Entriegeln des Schlosses, mit einer einzigen Entnahmebewegung von dem Fahrradrahmen entfernen.

Vorzugsweise kann der Energiespeicher ein wiederaufladbarer Akku sein, der insbesondere auch im vom Fahrradrahmen entfernten bzw. entnommenen Zustand entfernt von dem Elektrofahrrad aufgeladen werden kann.

Bevorzugt wird der Energiespeicher von dem Fahrradrahmen bzw. aus dem Fahrradrahmen nach unten entnommen.

In einer bevorzugten Ausführungsform kann die mindestens eine Rastverbindung als eine Rastklaue mit zwei nebeneinander angeordneten Rastkrallen mit jeweils gebogen verlaufenden Endbereichen ausgebildet sein. Durch die gebogen ausgebildeten Enden der Rastkrallen können die Rastkrallen einen korrespondierenden Rastbolzen wenigstens teilweise umgreifen bzw. hinter greifen. Jede Rastkralle kann als eine kragbalkenförmige Biegefeder ausgebildet sein. Folglich kann eine Rastklaue zwei nebeneinander platzierte Biegefedern aufweisen.

Gegenüberliegend zu der mindestens einen Rastverbindung kann mindestens ein Schwenkgelenk angeordnet sein. Das Schwenkgelenk ist also nicht koaxial mit der Rastverbindung ausgebildet, sondern entfernt von der Rastverbindung angeordnet. Die Rastverbindung und das Schwenkgelenk sind also räumlich und funktional getrennt voneinander vorgesehen. Nicht notwendigerweise, aber besonders bevorzugt, ist das Schwenkgelenk an demselben Längsende des langgestreckten Energiespeichers vorgesehen, wie die Rastverbindung. In diesem Fall bringt die Rastverbindung die Haltekraft bzw. Rastkraft im Wesentlichen in Längsrichtung des langgestreckten Energiespeichers auf. Das Schloss ist vorzugsweise an dem der Rastverbindung gegenüberliegenden Längsende des Energiespeichers vorgesehen

Das mindestens eine Schwenkgelenk kann eine gabelförmig ausgebildete Schwenklagerklaue mit zwei zueinander gegenüberliegenden kooperierenden Zinken aufweisen.

Die Herausfallsicherung kann zwei nebeneinander angeordnete separate Rastklauen aufweisen, die ein Rastklauenpaar bilden. Gegenüberliegend zu diesen können sich zwei ebenfalls nebeneinander angeordnete Schwenklagerklauen, die ein Schwenklagerklauenpaar bilden, befinden. Das Rastklauenpaar steht für zwei Rastverbindungen mit verdoppelter Haltekraft zur Verfügung. Das Schwenklagerklauenpaar ist für zwei Schwenkgelenke vorgesehen, sodass die Verschwenkbewegung entlang einer definierten kreissegmentförmigen Verschwenkbahn stattfindet.

Am Fahrradrahmen kann ein Steg vorgesehen sein, an dessen gegenüberliegenden Seiten jeweils ein Rastbolzen und jeweils ein Schwenklagerbolzen vorgesehen sind. Folglich können die Rastbolzen mit dem Rastklauenpaar die Rastverbindung bilden. Die Rastbolzen können von den Rastklauen wenigstens teilweise umgriffen werden. Die Schwenklagerbolzen können mit dem Schwenklagerklauenpaar das Schwenkgelenk bilden.

Um mit der mindestens einen Rastverbindung bzw. der Rastklaue eine Haltekraft erzeugen zu können, kann der Abstand zwischen den Enden zweier Rastkrallen der Rastklaue kleiner sein als der Durchmesser des von den Rastklauen umfassten Rastbolzens.

Der Abstand zwischen den Enden zweier Zinken der Schwenklagerklauen kann dem Durchmesser des von den Zinken umfassten Schwenklagerbolzens entsprechen. Somit kann beim Anbringen des Energiespeichers am Fahrradrahmen in einem ersten Montageschritt die Schwenklagerklaue des mindestens einen Schwenkgelenks leicht und schnell in den Schwenklagerbolzen eingehängt werden, so dass der Energiespeicher auf eine bestimmte Position ausgerichtet ist, um in einem zweiten Montageschritt den eingehängten Energiespeicher in dem mindestens einen Schwenkgelenk zu verschwenken bis er in die mindestens eine Rastverbindung sicher einrastet.

Nachfolgend werden Ausführungsbeispiele eines erfindungsgemäßen Elektrofahrrads anhand der beiliegenden Zeichnungen näher erläutert. Im Einzelnen zeigen:
- Fig. 1: eine Draufsicht auf ein Elektrofahrrad mit einem Energiespeicher;
- Fig. 2: eine schematische Seitenansicht auf den Energiespeicher aus Fig. 1;
- Fig. 3: eine schematische Seitenansicht auf den Energiespeicher und einen Fahrradrahmen bei der Entnahme oder der Montage des Energiespeichers;
- Fig. 4: eine schematische Detailansicht auf den Energiespeicher aus Fig. 3 im Bereich einer Rastverbindung und eines Schwenkgelenks;
- Fig. 5: eine schematische detaillierte Seitenansicht auf den Energiespeicher aus Fig. 4 im Bereich einer Stirnwand eines Energiespeichergehäuses mit einer Rastklaue und einer Schwenklagerklaue;
- Fig. 6: eine schematische Draufsicht auf die Stirnwand des Energiespeichergehäuses aus Fig. 5;
- Fig. 7: eine schematische Draufsicht auf einen Steg mit zwei Rastbolzen und zwei Schwenklagerbolzen.

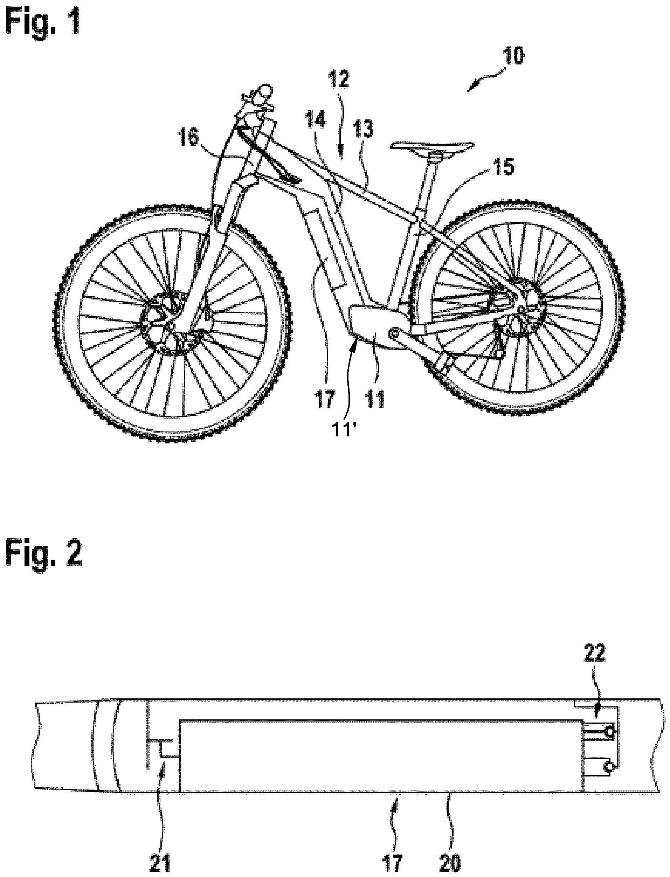

Fig. 1 zeigt ein Elektrofahrrad 10 mit einem Elektromotor 11', der hinter einer Elektromotor-Abdeckung 11 montiert ist.

Das Elektrofahrrad 10 weist einen steifen Fahrradrahmen 12 mit einem Oberrohr 13, einem Unterrohr 14, einem Sattelrohr 15 und einem Steuerrohr 16 auf.

Unterhalb des Unterrohrs 14 ist ein Energiespeicher 17 angeordnet. Der Energiespeicher 17, der vorzugsweise ein aufladbarer Akku ist, versorgt den Elektromotor 11' während des elektrisch unterstützten Fahrbetriebs mit elektrischer Energie.

Der Energiespeicher 17 kann aus Sicherheitsgründen, zum Aufladen, zu Wartungszwecken oder bei Verschleiß vom Fahrradrahmen 12 entnommen und später wieder daran montiert werden.

Der Energiespeicher 17 ist mit einem Energiespeichergehäuse 20 umgeben, an dessen erster Stirnseite, die das eine Längsende des Energiespeichers 17 darstellt, ein Schloss 21 angebracht ist. Mit dem Schloss 21 wird der Energiespeicher 17 in seiner Arbeitsposition verriegelt und vor Diebstahl geschützt. An der gegenüberliegenden Stirnseite des Energiespeichergehäuses 20, die das andere Längsende des Energiespeichers 17 darstellt, ist eine Herausfallsicherung 22 angebracht. Sie hindert den Energiespeicher 17 daran, zu Boden zu fallen, wenn das Schloss 21 entriegelt wird (siehe Fig. 2). Die Herausfallsicherung 22 ist als mindestens eine Rastverbindung ausgebildet.

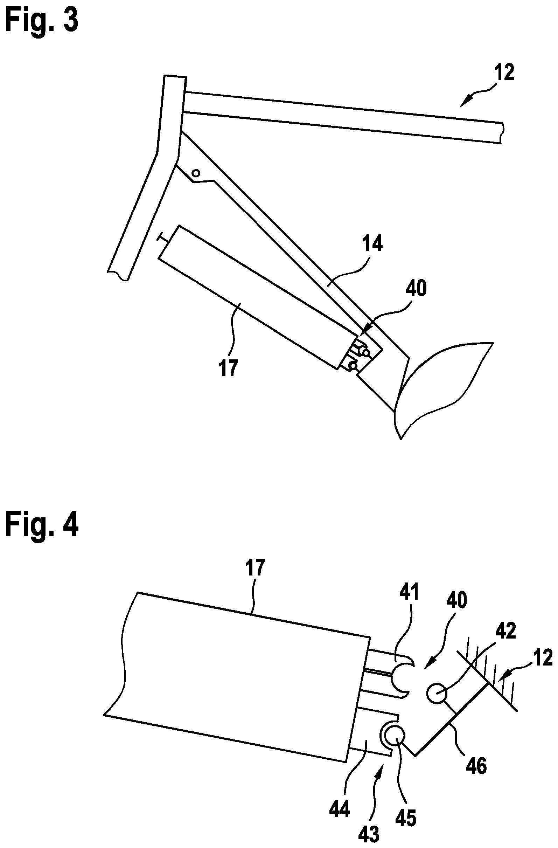

Fig. 4 zeigt eine Rastverbindung 40 mit einer energiespeicherseitigen Rastklaue 41, die mit einem rahmenseitigen Rastbolzen 42 verrastbar ist, wobei die Rastklaue 41 und der Rastbolzen 42 vorliegend voneinander getrennt sind, weil der Energiespeicher 17 beispielsweise vom Fahrradrahmen 12 bereits entnommen oder gerade an diesen montiert wird (siehe auch Fig. 3).

Unterhalb der Rastverbindung 40 befindet sich ein Schwenkgelenk 43. Das Schwenkgelenk 43 weist eine energiespeicherseitige offene Schwenklagerklaue 44 und einen rahmenseitigen Schwenklagerbolzen 45 auf. Der Energiespeicher 17 ist um das Schwenkgelenk 43 schwenkbar, wenn er vom Fahrradrahmen 12 entnommen oder an diesen montiert wird.

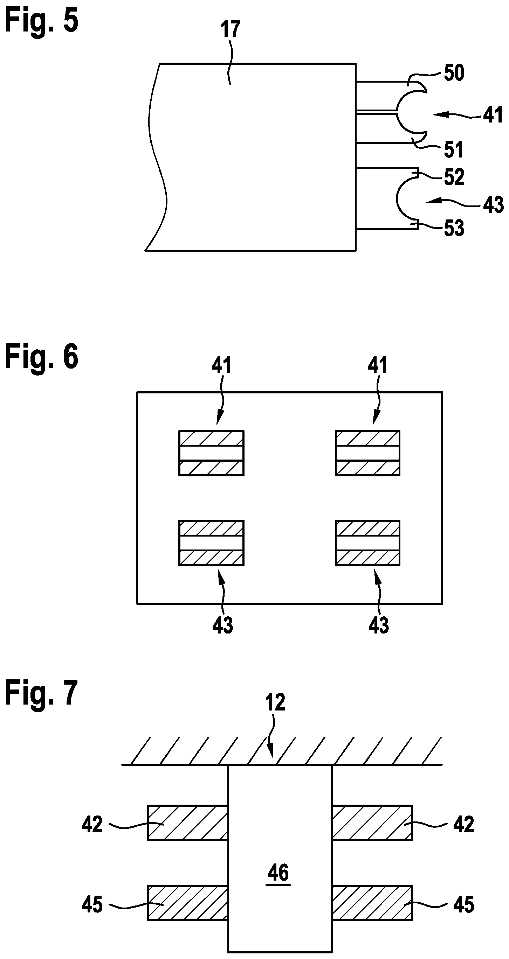

Der Rastbolzen 42 und der Schwenklagerbolzen 45 sind durch einen gemeinsamen Halte-Steg 46 mit dem Fahrradrahmen 12 verbunden (siehe Fig. 4 und 7).

Die hinterschnittene Rastklaue 41 weist zwei nebeneinander angeordnete Rastkrallen 50 und 51 auf (siehe Fig. 5). Die Rastkrallen 50 und 51 sind jeweils als eine kragbalkenförmige Biegefeder ausgebildet. Die Endbereiche der Rastkrallen 50 und 51 weisen einen gebogenen Verlauf auf. Der Abstand zwischen den Enden der beiden Rastkrallen 50 und 51 ist kleiner als der Durchmesser des von der Rastklaue 41 umfassten Rastbolzens 42.

Somit werden beim Öffnen der Rastverbindung 40 die Rastkrallen 50 und 51 vom Rastbolzen 42 auseinander gedrückt, wenn dieser die Enden der Rastkrallen 50 und 51 passiert. Sobald der Rastbolzen 42 die Enden der beiden Rastkrallen 50 und 51 passiert hat, schnappen die Rastkrallen 50 und 51 in ihre ursprüngliche Lage zurück. Somit erzeugen die Rastkrallen 50 und 51 respektive die Rastklaue 41 eine Haltekraft bzw. Rastkraft, durch welche der Energiespeicher 17 nach dem Entriegeln des Schlosses 21 kraftschlüssig von der Rastklaue 41 bzw. der Rastverbindung 40 gehalten wird. Zur Erhöhung der Gesamt-Haltekraft bzw. -Rastkraft können zwei Rastklauen 41 nebeneinander angeordnet sein und ein Rastklauenpaar bilden (siehe Fig. 6).

Die Schwenklagerklaue 43 ist gabelförmig mit zwei gegenüberliegenden Zinken 52 und 53 ausgebildet (siehe Fig. 5). Der Abstand zwischen den Enden der Zinken 52 und 53 entspricht dem Durchmesser des Schwenklagerbolzens 45. Somit kann der Energiespeicher 17 zur Montage am Fahrradrahmen 12 in einem ersten Montageschritt leicht und schnell mit der Schwenklagerklaue 43 in radialer Richtung des Schwenklagerbolzens 45 in den Schwenklagerbolzen 45 eingehängt werden, so dass die Rastklauen 41 in einem zweiten Montageschritt durch eine Verschwenkbewegung blindlings und dennoch treffsicher in Richtung der Rastbolzen 42 bewegt werden, und mit diesen zuverlässig verrasten. Um während der Verschwenkbewegung bei der Montage des Energiespeichers 17 eine definierte kreissegmentförmige Verschwenkbahn sicherzustellen, können zwei Schwenklagerklauen 43 nebeneinander angeordnet sein und ein Schwenklagerklauenpaar bilden (siehe Fig. 6).

### Bezugszeichenliste

- 10: Elektrofahrrad
- 11: Abdeckung
- 11': Elektromotor
- 12: Fahrradrahmen
- 13: Oberrohr
- 14: Unterrohr
- 15: Sattelrohr
- 16: Steuerrohr
- 17: Energiespeicher

- 20: Gehäuse
- 21: Schloss
- 22: Herausfallsicherung

- 40: Rastverbindung
- 41: Rastklaue
- 42: Rastbolzen
- 43: Schwenkgelenk
- 44: Schwenklagerklaue
- 45: Schwenklagerbolzen
- 46: Steg

- 50: Rastkralle
- 51: Rastkralle
- 52: Zinken
- 53: Zinken

## Patentansprüche

1. Elektrofahrrad (10) mit
einem Fahrradrahmen (12),
einem am Fahrradrahmen (12) auswechselbar montierten Energiespeicher (17), der mittels eines Schlosses (21) sicherbar ist, und
einer Herausfallsicherung (22), wobei der Energiespeicher (17) bei entriegeltem Schloss (21) mit der Herausfallsicherung (22) am Fahrradrahmen (12) gehalten wird,
**dadurch gekennzeichnet,**
**dass** die Herausfallsicherung (22) als mindestens eine kraftschlüssige Rastverbindung (40) ausgebildet ist, derart, dass zur Entnahme des Energiespeichers (17) die Haltekraft der Rastverbindung (40) überwunden werden muss

2. Elektrofahrrad (10) nach Anspruch 1, wobei die mindestens eine Rastverbindung (40) als eine Rastklaue (41) mit zwei nebeneinander angeordneten Rastkrallen (50, 51) mit jeweils gebogen verlaufenden Endbereichen ausgebildet ist.

3. Elektrofahrrad (10) nach einem der vorangegangenen Ansprüche, wobei gegenüberliegend zu der mindestens einen Rastverbindung (40) mindestens ein Schwenkgelenk (43) angeordnet ist.

4. Elektrofahrrad (10) nach einem der vorhergehenden Ansprüche, wobei die Herausfallsicherung (22) zwei nebeneinander angeordnete Rastklauen (41), die ein Rastklauenpaar bilden, und gegenüberliegend zu diesen zwei ebenfalls nebeneinander angeordnete Schwenklagerklauen (43), die ein Schwenklagerklauenpaar bilden, aufweist.

5. Elektrofahrrad (10) nach einem der vorhergehenden Ansprüche, wobei am Fahrradrahmen (12) ein Steg (46) und an dessen gegenüberliegenden Seiten jeweils ein Rastbolzen (42) und jeweils ein Schwenklagerbolzen (45) vorgesehen sind.

6. Elektrofahrrad (10) nach Anspruch 5, wobei der Abstand zwischen den Enden zweier Rastkrallen (50, 51) einer Rastklaue (41) kleiner ist als der Durchmesser des von den Rastklauen (41) umfassten Rastbolzens (42).

7. Elektrofahrrad (10) nach Anspruch 5 oder 6, wobei der Abstand zwischen den Enden zweier Zinken (52, 53) einer Schwenklagerklaue (44) dem Durchmesser des von den Zinken (52, 53) umfassten Schwenklagerbolzens (42) entspricht.

## Claims

1. Electric bicycle (10) with
a bicycle frame (12),
an energy store (17) which is replaceably mounted at the bicycle frame (12) and which can be secured by means of a lock (21), and
a fall-out prevention device (22), wherein the energy store (17) is held at the bicycle frame (12) with the fall-out prevention device (22) when the lock (21) is unlocked,
**characterized in that**
the fall-out prevention device (22) is designed as at least a force-locked snap connection (40) in such a way that the holding force of the locking connection (40) has to be overcome in order to remove the energy store (17).

2. Electric bicycle (10) according to claim 1, wherein the at least one snap connection (40) is designed as a snap claw (41) with two locking claws (50, 51) arranged next to one another with respectively curved end regions.

3. Electric bicycle (10) according to one of the preceding claims, wherein at least one pivot joint (43) is arranged opposite the at least one snap connection (40).

4. Electric bicycle (10) according to one of the preceding claims, wherein the fall-out prevention device (22) is provided with two snap claws (41) arranged next to one another, which form a snap claw pair, and opposite these with two pivot bearing claws (43) arranged next to one another, as well, which define a pivot bearing claw pair.

5. Electric bicycle (10) according to one of the preceding claims, wherein a web (46) is provided at the bicycle frame (12), and a locking bolt (42) and a pivot bearing bolt (45) are respectively provided at the opposite sides of the web.

6. Electric bicycle (10) according to claim 5, wherein the distance between the ends of two locking claws (50, 51) of a snap claw (41) is smaller than the diameter of the locking bolt (42) comprised by the snap claws (41).

7. Electric bicycle (10) according to claim 5 or 6, wherein the distance between the ends of two prongs (52, 53) of a pivot bearing claw (44) corresponds to the diameter of the pivot bearing bolt (42) comprised by the prongs (52, 53).

## Revendications

1. Bicyclette électrique (10) comprenant
un cadre de bicyclette (12),
un accumulateur d'énergie (17) monté de manière interchangeable sur le cadre de bicyclette (12), qui peut être bloqué au moyen d'une serrure (21), et
une sécurité anti-chute (22), l'accumulateur d'énergie (17) étant maintenu avec la sécurité anti-chute (22) sur le cadre de bicyclette (12) lorsque la serrure (21) est déverrouillée,
**caractérisée en ce que**
la sécurité anti-chute (22) est réalisée sous la forme d'au moins une liaison par encliquetage à force (40), de telle sorte que pour retirer l'accumulateur d'énergie (17), la force de maintien de la liaison par encliquetage (40) doit être surmontée.

2. Bicyclette électrique (10) selon la revendication 1, dans laquelle l'au moins une liaison par encliquetage (40) est réalisée sous la forme d'une griffe d'encliquetage (41) avec deux pinces d'encliquetage (50, 51) disposées l'une à côté de l'autre avec des régions d'extrémité s'étendant à chaque fois de manière courbée.

3. Bicyclette électrique (10) selon l'une quelconque des revendications précédentes, dans laquelle au moins une articulation pivotante (43) est disposée à l'opposé de l'au moins une liaison par encliquetage (40).

4. Bicyclette électrique (10) selon l'une quelconque des revendications précédentes, dans laquelle la sécurité anti-chute (22) présente deux griffes d'encliquetage (41) disposées l'une à côté de l'autre, qui forment une paire de griffes d'encliquetage, et deux griffes de palier pivotant (43) également disposées l'une à côté de l'autre, qui forment une paire de griffes de palier pivotant, à l'opposé de celles-ci.

5. Bicyclette électrique (10) selon l'une quelconque des revendications précédentes, dans laquelle une nervure (46) est prévue sur le cadre de bicyclette (12) et à chaque fois un boulon d'encliquetage (42) et à chaque fois un boulon de palier pivotant (45) sont prévus sur ses côtés opposés.

6. Bicyclette électrique (10) selon la revendication 5, dans laquelle la distance entre les extrémités de deux pinces d'encliquetage (50, 51) d'une griffe d'encliquetage (41) est inférieure au diamètre du boulon d'encliquetage (42) entouré par les griffes d'encliquetage (41).

7. Bicyclette électrique (10) selon la revendication 5 ou 6, dans laquelle la distance entre les extrémités de deux dents (52, 53) d'une griffe de palier pivotant (44) correspond au diamètre du boulon de palier pivotant (42) entouré par les dents (52, 53).
